# EUROPEAN PATENT APPLICATION

(11) **EP 2 887 057 A1**
(43) Date of publication of application: **24.06.2015**
(21) Application number: 13005867.0
(22) Date of filing: 17.12.2013
(51) Int. Cl.: G01N 27/18, G01N 33/00

(54) **Device and method of humidity compensated gas concentration monitoring by thermal conductivity measurements**

(71) Applicant: Sensirion AG, 8712 Stäfa (CH)
(72) Inventor: Hornung, Mark, 8712 Stäfa (CH)
(74) Representative: Mirza, Akram Karim

(57) **Abstract**

A sensor (10) and methods for monitoring a parameter relating to the concentration of a fluid components are described using one or more heat sources (15) and at least one thermal conductivity detector (16,17) for measuring a quantity relating to temperature with the at least one detector (16,17) being located at a fixed distance from the one or more heat sources (15), and a humidity sensor (22) spatially separated from the one or more heat sources (15) and from the at least one detector (16,17) while being exposed to essentially the same fluid, and using said humidity measurement as a correction parameter for the concentration measurement.

## Description

### Technical Field

The present invention relates to a gas concentration monitor based on a thermal conductivity measurement and related methods to improve the accuracy of such gas concentration measurements.

### Background of the Invention

Various devices are known which use the heat transfer between a heated element such as a wire and a fluid flowing around the heated element to determine flow properties and material properties of the flow components. Examples of such devices include the so-called Pirani gauge. Other examples, described for example in the co-owned United States patent applications US 2004/0099057 and US 2010/0089118, use a heat source located between two temperature probes to determine flow rates and composition parameters.

In the United States patent US 7360396 B2 a method and a gas sensor are described where an arithmetic unit calculates humidity based on the differences between standardized output values, and corrects the standardized outputs based on the calculated humidity and humidity correction equations.

Humidity sensors as such are described for example in the United States patent no. 6690569 and references cited therein.

In the light of the above it can be seen as a object of the present invention to improve the performance of gas concentration sensors which are based on thermal conductivity.

### Summary of the Invention

In accordance with a first aspect of the invention there is provided a sensor for measuring the concentration of a gas in combination with a discrete sensor designed specifically to detect humidity.

The discrete sensor designed specifically to detect humidity is preferably a capacitive sensor. The humidity sensor can further include an integrated temperature sensor such that the humidity sensor can generate directly a measurement of the absolute humidity.

The sensor is based on measuring changes of the thermal conductivity of a fluid to which the sensor is exposed. Preferably, the sensor includes one or more heat sources and at least one, but preferably two or more detectors for measuring a quantity relating to temperature with the detectors being located at a fixed distance from the one or more heat sources and a temperature sensor coupled to the same substrate onto which the components of the concentration sensor are mounted. The detectors and heat sources together with the humidity and temperature sensors are preferably mounted on a single semiconductor substrate or on several pieces of semiconductor material bonded together.

In particular, it can be advantageous to combine the above sensor elements with further electronic components on a single semiconductor substrate to form an integrated sensor device based for example fully on a CMOS semiconductor manufacturing process. The electronic components can include analog and digital components, preferably both, together with a bus to transfer data and instructions to and from the chip.

However, it is also possible to manufacture the concentration sensor and the humidity sensor on separate substrates and combine both sensors at a later stage of the production of the sensor in a common chip package.

The elements of the sensor are typically connected to an operating and read-out unit to perform a correction of the gas measurement based on the measurement of humidity and temperature. The latter measurement is preferably performed essentially concurrent to the concentration measurement. Preferably, the operating unit calculates a corrected parameter related to the thermal conductivity of the gas mixture around the sensors such as air and uses the corrected thermal conductivity in the determination of the gas concentration, particularly by eliminating rom the measurement of the gas concentration the changes in thermal conductivity as caused by humidity f.

These and further aspects of the invention are described in the following detailed description making reference to the drawings. Further, all embodiments of the present invention concerning a method might be carried out in the order of the steps as described. Nevertheless this has not to be the only essential order of steps but all different orders of the method steps where technically feasible shall be comprised in the scope of the claims and be disclosed by the method claims.

### Brief Description of the Drawings

The following detailed description makes reference to the annexed drawings, wherein:
FIGs. 1A - 1C show details of a sensor for use in accordance with an example of the invention; and
FIGs. 2A - 2B show details of a method in accordance with an example in accordance with the invention.

### Detailed Description

The gas concentration sensor 10 can be adapted from known sensors such as described for example in the above referenced '057 and '118 documents or any documents cited therein.

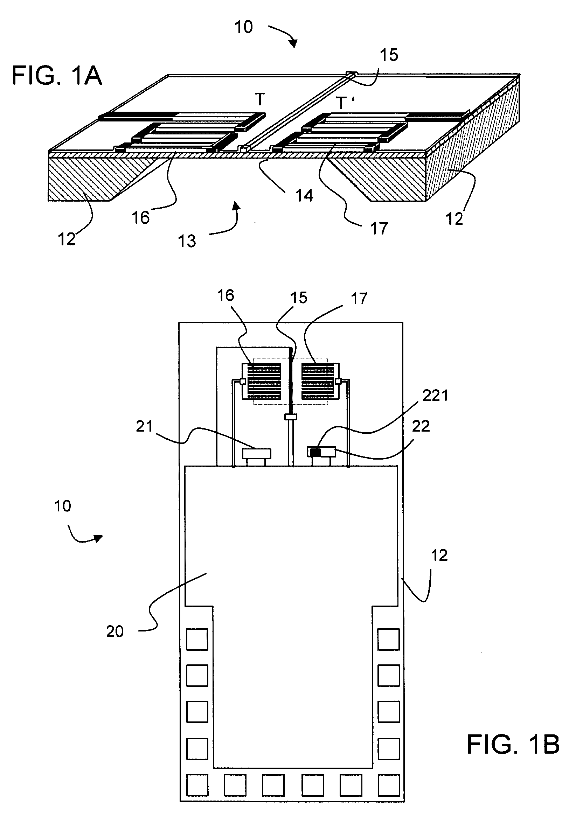

As shown in FIGs. 1A and 1B the sensor 10 can for example mounted onto a semiconductor chip substrate 12, in which an opening or recess 13 has been etched. The opening or recess 13 is spanned by a membrane 24 made of a dielectric. A resistive heating element 15 is arranged on the membrane 14. Two thermo-piles to be used as temperature detectors 16, 17 are arranged on two sides of the heating element 15. It should be understood that the thermopiles 16,17 represent an example of implementing a compact temperature measurement on the membrane 14 and that similar temperature sensors, based for example on resistance changes, can be used.

A thermal conductivity sensor with temperature measurements at at least two sides of the heating element 15 as shown is considered to be robust and accurate. However, a thermal conductivity measurement can also be based on using just one temperature detector, e.g. detector 16.

As shown in Fig. 1B, a processing circuit 20 as well as a fluid or substrate temperature detector 21 are arranged on the semiconductor chip substrate 12. The function of processing circuit 20 is described in more detail below. The temperature detector 21 serves to measure the absolute temperature of the gas and/or of the semiconductor chip 12, e.g. in order to convert the relative measurement of the thermopiles 16,17 into absolute temperature values or in order to improve or correct the measured results by a more precise humidity correction as described below. The temperature detector 21 is placed on the substrate 12 at a location outside the range of influence of the heating 15. The electronic circuitry of the processing unit 20 and further control and supply circuitry are implemented in the present example as integrated CMOS circuit using a CMOS process.

Also shown in Fig. 1B is a discrete humidity sensor 22 arranged on the semiconductor chip substrate 12. The humidity sensor 22 is dedicated to measure the relative humidity of the gas in order to improve or correct the measured results by a more precise humidity correction as described below. The humidity sensor 22 is also placed on the substrate 12 at a location outside the range of influence of the heating 15. Even though the humidity sensor can be based on various measurement principles, it is preferred to use a capacitive humidity sensor which can be readily integrated into a CMOS circuit. Such sensors are known per se and typically include a temperature sensor 221 such that the output of the humidity sensor (typically a measurement of the relative humidity) can be converted to a reading of the absolute humidity. Further details of such sensors are for example described in the co-owned US patent 6690569. Alternatively, the sensor can be a sensor which is capable of determining the absolute humidity directly, e.g. a mirror dew point meter.

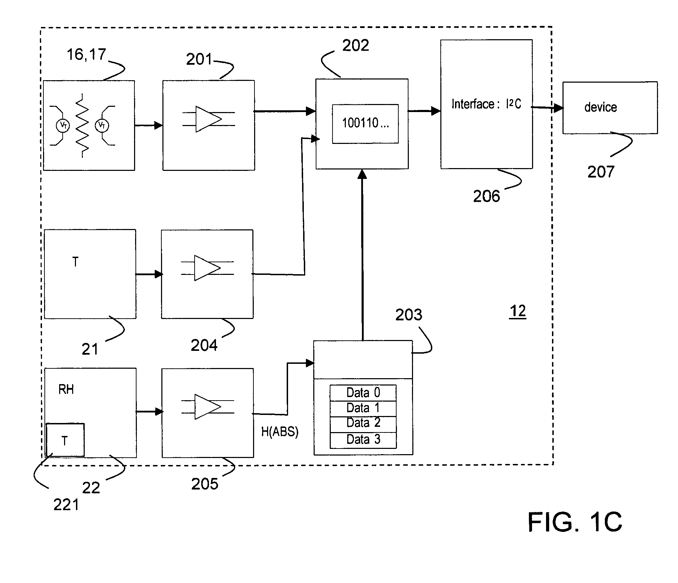

A block diagram of the above components of the sensor 10 is shown in FIG. 1C. Measurements T and T' from the temperature detectors 16,17 first enter an on-chip analogue amplification and filtering unit 201 and then a digital signal processing unit 202 linked to an internal EEPROM memory 203 which can be used to store for example the calibration and/or correction data. The signal of the on-chip temperature detector 21 first enters another on-chip analogue amplification and filtering unit 204 before being transferred also to the digital signal processing unit 202. This temperature measurement can be used to correct the concentration measurements for the effects of the temperature of the substrate 12 and/or the flow or convert relative temperature measurements into absolute temperature measurements.

The signal of the on-chip humidity detector 22 first enters another on-chip analogue amplification and filtering unit 205. A processed signal representative of the relative humidity as measured and converted into an absolute humidity value using the temperature as measured by the integrated temperature sensor 221 or the temperature sensor 21is used to address a correction map stored in the memory 203. Given temperature and relative humidity a table representing a function of thermal conductivity versus absolute humidity can be used to derive a correction value for the conductivity processor 202, which is thus enabled to provide a value for the concentration of a gas component corrected for the error as caused by humidity in the gas flow. The corrected value for the concentration of a flow component can be transferred via a bus interface 206 from the chip to the device 207 which incorporates the sensor 10 for display or further use.

It should be understood that in cases where both sensor are separate, e.g., manufactured on different dies but later combined within the same package, the correction part of the processing unit (20) can be integrated with the circuitry of the thermal conductivity sensor (15,16,17) or with the circuitry of the humidity sensor (22, 221). In another alternative, it is possible to distribute the correction part onto both circuits or to use a processing unit separate from both sensors.

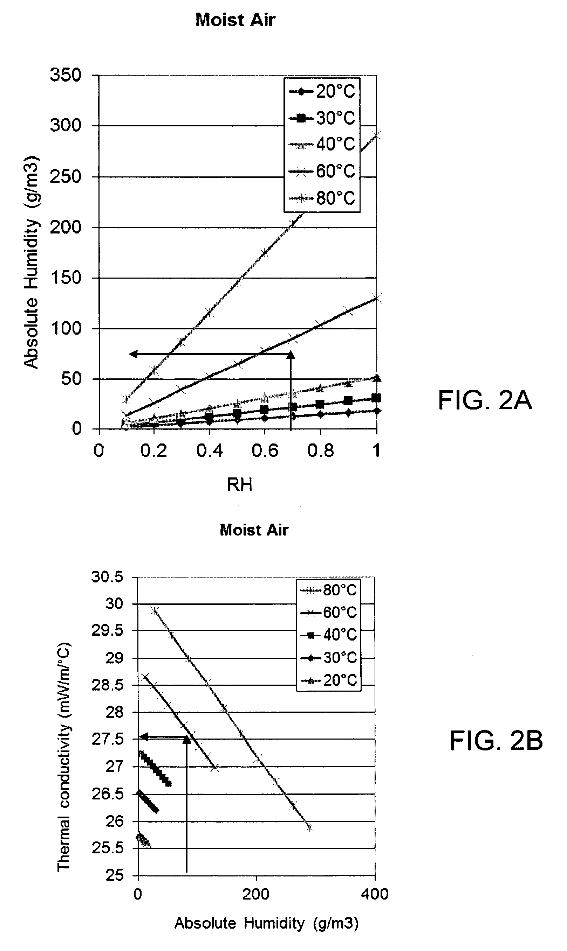

Examples of tables or functions which could be stored or executed to derive a correction parameter for humidity are shown in FIGs. 2A and 2B. The graph of FIG. 2A illustrates linear functions relating relative humidity RH to an absolute humidity. These graphs are dependent on the temperature and the five graphs shown represent the same function at five different flow temperatures. Assuming for example that the relative humidity measurement as provided by the humidity sensor 22 is 0.6 and the temperature as provided by the temperature sensor 21 or by the internal temperature sensor 221 is 60°C, the value of the absolute humidity is about 75 g/m³.

The linear functions or graphs of FIG. 2B illustrate a relationship between the absolute humidity (in g/m³) vs thermal conductivity (in mW/m/°C). Using the same values as above, a value of about 27.5 mW/m/°C can be established for the contribution of the flow humidity to the thermal conductivity at 0.6 RH and 60°C. Subtracting this amount from the conductivity measurement as performed by the conductivity sensor 15,16,17 isolates the contribution made by the gas component to be measured from the humidity effects.

It is worth noting that the discrete humidity sensor has the advantage (compared to the methods as described for example in the US 7360396 patent) of providing a faster and more accurate measurement of the flow local humidity, particularly as both measurements can be perform simultaneously. The relationships for the conversion of the relative humidity into absolute humidity and for the conversion of humidity values into thermal conductivity can be readily represented as linear functions and hence less complex and more accurately to implement.

While there are shown and described presently preferred embodiments of the invention, it is to be understood that the invention is not limited thereto but may be otherwise variously embodied and practised within the scope of the following claims. It is for example feasible to manufacture the humidity sensor on a different substrate than the concentration sensor and combine both sensors as separate dies into a common chip package (with suitable pins and openings to connect both sensor parts to the exterior).

## Claims

1. A sensor for monitoring a parameter relating to the concentration of a fluid components, the sensor (10) comprising one or more heat sources (15) and at least one detector (16,17) for measuring a quantity relating to temperature with the at least one detector (16,17) being located at a fixed distance from the one or more heat sources (15), and a humidity sensor (22) spatially separated from the one or more heat sources (15) and from the at least one detector (16,17) while being exposed to essentially the same fluid.

2. The sensor (10) according to claim 1, wherein the humidity sensor (22) is a capacitive humidity sensor.

3. The sensor (10) according to claim 1 or 2, wherein the humidity sensor (22) includes a temperature sensor (221) and is capable of measuring absolute humidity values.

4. The sensor (10) according to any of claims 1 to 3, wherein the one or more heat sources (15), the at least one detector (16,17), and the humidity sensor (22) are enclosed in a single (chip) package.

5. The sensor (10) according to any of the preceding claims, wherein the one or more heat sources (15),the at least one detector (16,17), and the humidity sensor (22) are mounted on a common substrate (12).

6. The sensor (10) according to any of the preceding claims, further comprising a temperature sensor (21) spatially separated from the one or more heat sources (15) and from the at least one detector (16,17).

7. The sensor (10) according to claim 6, wherein the temperature sensor (21), the one or more heat sources (15), the at least one detector (16,17, and the humidity sensor (22, 221) are mounted on a common substrate (12).

8. The sensor (10) of any of the preceding claims, further comprising a processing unit (20) mapping temperature and measurements of the humidity sensor (22, 221) to a value of a correction parameter for correcting the concentration measurement.

9. The sensor (10) of any of the preceding claims, being an integrated unit implemented in CMOS technology.

10. A method of determining the concentration of a fluid component using a thermal conductivity measurement, comprising the steps of determining essentially simultaneously with the thermal conductivity measurement a measurement determining the relative humidity of the fluid using a discrete humidity sensor (22,221) and converting said humidity measurement into a value of a correction parameter for the concentration measurement.
